# FASCICULE DE BREVET EUROPEEN

(11) **EP 2 792 177 B1**
(45) Date de publication et mention de la délivrance du brevet: **01.03.2017**
(21) Numéro de dépôt: 12809174.1
(22) Date de dépôt: 12.12.2012
(51) Int. Cl.: H04W 12/12, H04W 8/04, H04W 8/20, H04W 8/24, H04W 8/18, H04W 12/08, H04L 29/06

(54) **PROCÉDÉ DE CONTRÔLE D'ACCÈS A UN RÉSEAU CELLULAIRE**
VERFAHREN ZUR KONTROLLE DES ZUGANGS ZU EINEM ZELLULAREN NETZWERK
METHOD FOR CONTROLLING ACCESS TO A CELLULAR NETWORK

(30) Priorité: 12.12.2011 FR 1161491
(43) Date de publication de la demande: 22.10.2014
(73) Titulaire: Buzzinbees Sas, 38170 Seyssinet Pariset (FR)
(72) Inventeur: LAMBERTON, Marc, F-06600 Antibes (FR); ANSLOT, Michel, F-06250 Mougins (FR); COPPE, Gilles, F-06560 Valbonne (FR); BOUCKAERT, Philippe, F-06410 Biot (FR)
(74) Mandataire: Hautier, Nicolas
(86) Numéro de dépôt international: PCT/EP2012/075280
(87) Numéro de publication internationale: WO 2013/087718

(56) Documents cités:
- EP-A2- 0 711 090
- GB-A- 2 327 570

## Description

Le domaine technique de l'invention est celui des réseaux de communication cellulaire.

Le problème que se propose de résoudre est le suivant. Un terminal mobile, afin de pouvoir utiliser les services d'un réseau de communication cellulaire doit posséder un abonnement auprès d'un fournisseur de services.

Un tel abonnement est matérialisé sous forme d'une carte module universel d'identification d'abonné, en anglais « universal subscriber identity module » ou USIM. Une carte USIM est une carte à microcircuit de type mémoire sécurisée. Ladite mémoire contient tous les identifiants permettant au réseau de communication cellulaire de reconnaître ledit abonnement et au terminal d'utiliser les services du réseau de communication cellulaire. Une telle carte USIM est parfois disposée de manière inamovible dans un terminal, par exemple par soudage. Cependant le plus souvent, une carte USIM est installée dans un terminal au moyen d'un lecteur de carte et est ainsi amovible.

Il peut arriver qu'un abonnement se voie concéder une tarification avantageuse par un fournisseur sous réserve d'une utilisation particulière, par exemple avec un type de terminal.

Ceci est le cas, par exemple, d'un terminal machine utilisé dans un environnement inter machine pour réaliser une transmission de donnée, telle une télémesure, entre un terminal machine capteur et un terminal machine collecteur de donnée. Les conditions de communication inter machine sont très différentes des conditions de communication en téléphonie mobile. Un fournisseur de service peut ainsi proposer un abonnement dédié à un terminal machine, avec une tarification adaptée à ces conditions. Cependant, il est impératif qu'un tel abonnement ne puisse être utilisé avec un terminal de téléphonie mobile, pour lequel la tarification est inadaptée.

Le document GB 2 327 570 décrit une solution dans laquelle une liste d'identifiants de terminal (IMEI) est enregistrée dans une carte SIM. En comparant l'IMEI du terminal dans lequel est inséré la carte SIM et la liste enregistrée, la carte SIM peut déterminer si elle est prévue pour fonctionner dans ce terminal. Elle peut en conséquence bloquer son fonctionnement.

Il serait avantageux de pouvoir renforcer une telle politique de tarif en toute sécurité, sans risquer qu'un abonnement au tarif avantageux soit déplacé pour être inséré et utilisé dans un terminal qui n'est pas autorisé à utiliser ledit tarif.

Il serait également avantageux de pouvoir modifier de manière simple et rapide les conditions d'accès à un réseau pour un terminal équipé de la carte SIM.

L'invention a pour objectif de proposer une solution permettant d'éviter qu'un abonnement au tarif donné soit utilisé dans un terminal qui n'est pas autorisé à utiliser ledit abonnement et ceci sans entraîner de contraintes pour l'utilisateur du terminal ou pour l'opérateur.

A cet effet, la présente invention prévoit d'ajouter à un réseau de communication cellulaire un procédé de contrôle d'accès qui n'autorise l'accès qu'après vérification positive des conditions d'utilisation. Plus précisément, la présente invention prévoit pour cela un procédé de contrôle d'accès à un réseau de communication cellulaire, pour un terminal identifié par un identifiant de terminal avec un abonnement identifié par un identifiant d'abonnement comprend les étapes suivantes effectuées à l'aide d'au moins un processeur:
- création, dans une base de donnée enregistrée dans des moyens de stockage de données d'au moins un enregistrement associant une pluralité d'identifiants d'abonnement comprenant au moins un identifiant d'abonnement avec une pluralité d'identifiants de terminal comprenant au moins un identifiant de terminal,
- vérification que ledit terminal ensemble avec ledit abonnement sont bien autorisés à utiliser le réseau de communication cellulaire, par vérification de la présence dans la base de donnée d'au moins un enregistrement comprenant l'identifiant d'abonnement dudit abonnement associé avec l'identifiant de terminal dudit terminal, ladite vérification étant réalisée lors de chaque tentative de connexion dudit terminal ou dudit abonnement au réseau de communication cellulaire,
- autorisation d'accès ou refus d'accès du terminal à l'abonnement en fonction du résultat de l'étape de vérification.

Ainsi, lors d'une tentative de connexion, si dans la base de données l'identifiant du terminal n'est pas associé à l'identifiant d'abonnement alors l'accès au réseau est refusé. Dans le cas contraire l'accès est autorisé.

Selon un mode de réalisation principal, l'invention porte sur un procédé de contrôle d'accès à un réseau de communication cellulaire, pour un terminal identifié par un identifiant de terminal avec un abonnement identifié par un identifiant d'abonnement, comprenant les étapes suivantes effectuées à l'aide d'au moins un processeur:
- création, dans une base de donnée enregistrée dans des moyens de stockage de données, d'au moins un enregistrement associant une pluralité d'identifiants d'abonnement comprenant au moins un identifiant d'abonnement avec une pluralité d'identifiants de terminal comprenant au moins un identifiant de terminal, la pluralité d'identifiants de terminal de l'enregistrement étant formée par un ou plusieurs identifiants de terminal et/ou par un ou plusieurs intervalles d'identifiants de terminal et/ou par un ou plusieurs préfixes d'identifiants de terminal, chaque préfix étant réputé comprendre tous les identifiants de terminal débutant par ledit préfixe,
- vérification que ledit terminal ensemble avec ledit abonnement sont bien autorisés à utiliser le réseau de communication cellulaire, par vérification de la présence dans la base de donnée d'au moins un enregistrement comprenant l'identifiant d'abonnement dudit abonnement associé avec l'identifiant de terminal dudit terminal ou associé avec un préfixe d'identifiant dudit terminal,
   l'enregistrement comprenant également un « mode de valeur » qui détermine comment doit être vérifié, lors de l'étape de vérification, la présence de l'identifiant de terminal dudit terminal parmi les identifiants de terminal de la pluralité d'identifiants de terminal de l'enregistrement, le « mode de valeur » indiquant soit que l'identifiant de terminal dudit terminal doit être vérifié exactement, soit que l'identifiant de terminal dudit terminal doit est vérifié pour une partie limitée à son préfixe,
   ladite vérification étant réalisée lors de chaque tentative de connexion dudit terminal ou dudit abonnement au réseau de communication cellulaire,
- autorisation d'accès ou refus de l'accès dudit terminal audit réseau en fonction du résultat de l'étape de vérification.

Comme cela sera décrit plus en détail par la suite, ce mode de réalisation permet de choisir comment l'on souhaite autoriser le fonctionnement d'un identifiant d'abonnement, typiquement un IMSI porté par une carte SIM, avec les appareils dans lesquels cette carte SIM est susceptible d'être insérée .

En fonction de la valeur indiquée dans l'enregistrement, on pourra choisir :
- d'autoriser le fonctionnement de l'identifiant d'abonnement uniquement si l'identifiant du terminal qui souhaite accéder au réseau figure parmi les identifiants de terminal compris dans l'enregistrement. Ainsi tous les chiffres de l'identifiant du terminal qui souhaite accéder au réseau doivent figurer dans l'un des identifiants de terminal compris dans l'enregistrement.
   Si l'enregistrement ne comporte qu'un seul identifiant de terminal, alors la carte SIM ne pourra pas être utilisée dans un autre appareil que le terminal dont l'identifiant de terminal est indiqué dans l'enregistrement.
   Si l'enregistrement comporte une pluralité d'identifiants de terminal ou un ou plusieurs intervalles d'identifiants de terminal, alors la carte SIM ne pourra être utilisée que dans les appareils dont l'identifiant de terminal appartient à cette pluralité d'identifiants de terminal ou cet/ces intervalles d'identifiants de terminal.
- d'autoriser le fonctionnement de l'identifiant d'abonnement uniquement si l'identifiant de terminal du terminal qui souhaite accéder au réseau présente un préfixe qui correspond à un ou des préfixes compris dans l'enregistrement.
Ainsi il suffit que seuls les chiffres du préfix de l'identifiant de terminal qui souhaite accéder au réseau figurent dans l'un des préfix compris dans l'enregistrement, pour que le terminal soit autorisé à accéder au réseau.

Ainsi, la carte SIM ne pourra pas être utilisée dans d'autres appareils que ceux dont l'identifiant de terminal présente le préfix indiqué dans l'enregistrement.

Comme cela apparaîtra plus précisément en détail par la suite, l'invention offre ainsi une solution souple et efficace pour éviter qu'une carte SIM soit retirée d'un appareil auquel elle est destinée pour être ensuite utilisée avec un autre appareil. Par ailleurs cette solution est aisément configurable pour s'adapter facilement aux différents cas d'utilisations possibles.

De manière facultative, l'invention comprend en outre au moins l'une quelconque des caractéristiques et étapes optionnelles indiquées ci-dessous.

Selon une autre caractéristique de l'invention, l'étape de création d'un enregistrement dans la base de données est automatiquement réalisée lors d'une première tentative de connexion d'un terminal et d'un abonnement, l'enregistrement ainsi créé comprenant une pluralité d'identifiants d'abonnement comprenant au moins l'identifiant d'abonnement dudit abonnement associé avec une pluralité d'identifiants de terminal comprenant au moins l'identifiant de terminal dudit terminal.

Selon une autre caractéristique de l'invention, une pluralité d'identifiants d'abonnement est définie par au moins un intervalle défini par un identifiant d'abonnement minimum et un identifiant d'abonnement maximum, et est réputée comprendre tous les identifiants d'abonnement compris entre ledit identifiant d'abonnement minimum et ledit identifiant d'abonnement maximum.

Selon une autre caractéristique de l'invention, une pluralité d'identifiants de terminal est définie par au moins un préfixe d'identifiant de terminal, et est réputée comprendre tous les identifiants de terminal débutants par ledit préfixe.

Selon une autre caractéristique de l'invention, un enregistrement dans la base de données comprend encore un « mode de vérification » prenant ses valeurs parmi : « pas de vérification » pour lequel l'identifiant d'abonnement de l'abonnement n'est pas vérifié, « vérification statique » pour lequel l'identifiant d'abonnement de l'abonnement est vérifié en relation avec l'identifiant de terminal et les enregistrements de la base de données, et « vérification dynamique » pour lequel un enregistrement de la base de données est crée/mis à jour, le « mode de vérification » dudit enregistrement étant après création modifié de « vérification dynamique » à une autre valeur.

Selon une autre caractéristique de l'invention, un enregistrement dans la base de données comprend encore un « mode de valeur » prenant ses valeurs parmi : « IMEI » pour lequel un identifiant de terminal est vérifié exactement, et « TAC » pour lequel un identifiant de terminal est vérifié pour une partie limité à son préfixe.

Selon une autre caractéristique de l'invention, les étapes de vérification et d'autorisation sont mises en oeuvre par interception des messages de contrôle, transitant nécessairement par un module, lors d'une tentative de connexion d'un terminal au réseau de communication cellulaire.

Selon une autre caractéristique de l'invention, ledit module est un module registre de localisation.

Selon une autre caractéristique de l'invention, ledit module est un module registre d'identité des équipements.

Selon une autre caractéristique de l'invention, ledit terminal est un capteur dédié à une machine. Il est configuré pour transmettre sur le réseau des informations qu'il capte. Ces informations sont typiquement transmises à un serveur connecté audit réseau et associé à une application.

Selon une autre caractéristique de l'invention, le procédé étant appliqué à un environnement inter machines dédié à des terminaux machines, les étapes de vérification et d'autorisation sont mises en oeuvre par interception des messages de contrôle, transitant nécessairement par un module se substituant, pour lesdits terminaux machines, à un module registre de localisation et/ou à un module registre d'identité d'équipement. De préférence, ledit module assure les fonctions de module registre de localisation et de module registre d'identité d'équipement.

Au moins l'une quelconque des étapes précédentes est exécutée à l'aide d'au moins un processeur de données.

Selon un autre aspect, la présente invention porte sur un produit programme d'ordinateur ou sur un média non-transitoire lisible par un ordinateur, le produit ou le média comprenant des instructions, qui lorsqu'elles sont effectuées par au moins un processeur, exécute au moins les étapes suivantes du procédé selon l'invention:
- vérification que ledit terminal ensemble avec ledit abonnement sont bien autorisés à utiliser le réseau de communication cellulaire, par vérification de la présence dans la base de donnée d'au moins un enregistrement comprenant l'identifiant d'abonnement dudit abonnement associé avec l'identifiant de terminal dudit terminal, ladite vérification étant réalisée lors de chaque tentative de connexion dudit terminal ou dudit abonnement au réseau de communication cellulaire,
- autorisation d'accès ou refus d'accès du terminal à l'abonnement en fonction du résultat de l'étape de vérification.

De manière avantageuse, selon un mode de réalisation particulier, le produit programme d'ordinateur comprend également des instructions, qui lorsqu'elles sont effectuées par au moins un processeur, exécute l'étape de création, dans une base de donnée, d'au moins un enregistrement associant une pluralité d'identifiants d'abonnement comprenant au moins un identifiant d'abonnement avec une pluralité d'identifiants de terminal comprenant au moins un identifiant de terminal.

Selon un autre aspect, la présente invention porte sur un système de contrôle d'accès à un réseau de communication cellulaire, pour un terminal identifié par un identifiant de terminal avec un abonnement identifié par un identifiant d'abonnement (IMSI). Le système comprend:
- des moyens de stockage de données comprenant une base de donnée, la base de donnée comportant au moins un enregistrement associant une pluralité d'identifiants d'abonnement comprenant au moins un identifiant d'abonnement avec une pluralité d'identifiants de terminal comprenant au moins un identifiant de terminal,
- des moyens de vérification configurés pour vérifier, lors de chaque tentative de connexion dudit terminal ou dudit abonnement au réseau de communication cellulaire, que ledit terminal ensemble avec ledit abonnement sont bien autorisés à utiliser le réseau de communication cellulaire, par vérification de la présence dans la base de donnée d'au moins un enregistrement comprenant l'identifiant d'abonnement dudit abonnement associé avec l'identifiant de terminal dudit terminal,
- des moyens agencés pour autoriser l'accès ou refuser l'accès dudit terminal audit réseau en fonction du résultat de la vérification.

Selon un autre aspect, la présente invention prévoit un procédé de contrôle d'accès à un réseau de communication cellulaire, pour un terminal identifié par un identifiant de terminal avec un abonnement identifié par un identifiant d'abonnement comprend les étapes suivantes :
- création, dans une base de donnée, d'au moins un enregistrement associant une pluralité d'identifiants d'abonnement comprenant au moins un identifiant d'abonnement avec une pluralité d'identifiants de terminal comprenant au moins un identifiant de terminal,
- vérification que ledit terminal ensemble avec ledit abonnement sont bien autorisés à utiliser le réseau de communication cellulaire, par vérification, dans une base de donnée comprenant au moins un enregistrement associant une pluralité d'identifiants d'abonnement comprenant au moins un identifiant d'abonnement avec une pluralité d'identifiants de terminal comprenant au moins un identifiant de terminal, de la présence dans la base de donnée d'au moins un enregistrement comprenant l'identifiant d'abonnement dudit abonnement associé avec l'identifiant de terminal dudit terminal, ladite vérification étant réalisée lors de chaque tentative de connexion dudit terminal ou dudit abonnement au réseau de communication cellulaire,
- autorisation d'accès ou refus d'accès du terminal à l'abonnement en fonction du résultat de l'étape de vérification.

L'enregistrement associant une pluralité d'identifiants d'abonnement avec une pluralité d'identifiants de terminal peut être créé lors de la première tentative de connexion du terminal au réseau. Il peut également être créé avant la première tentative de connexion du terminal au réseau.

D'autres caractéristiques, détails et avantages de l'invention ressortiront plus clairement de la description détaillée donnée ci-après à titre indicatif en relation
avec des dessins sur lesquels :
- la figure 1 présente le format d'un identifiant d'abonnement IMSI,
- la figure 2 présente le format d'un identifiant de terminal IMEI,
- la figure 3 présente le format d'un exemple enregistrement de la base de donnée selon l'invention,

- la figure 4 présente un diagramme de flot des échanges entre modules lors d'une tentative de connexion d'un terminal à un réseau cellulaire selon un premier mode de réalisation de l'invention,
- la figure 5 présente un diagramme de flot des échanges entre modules lors d'une tentative de connexion d'un terminal à un réseau cellulaire selon un deuxième mode de réalisation de l'invention.

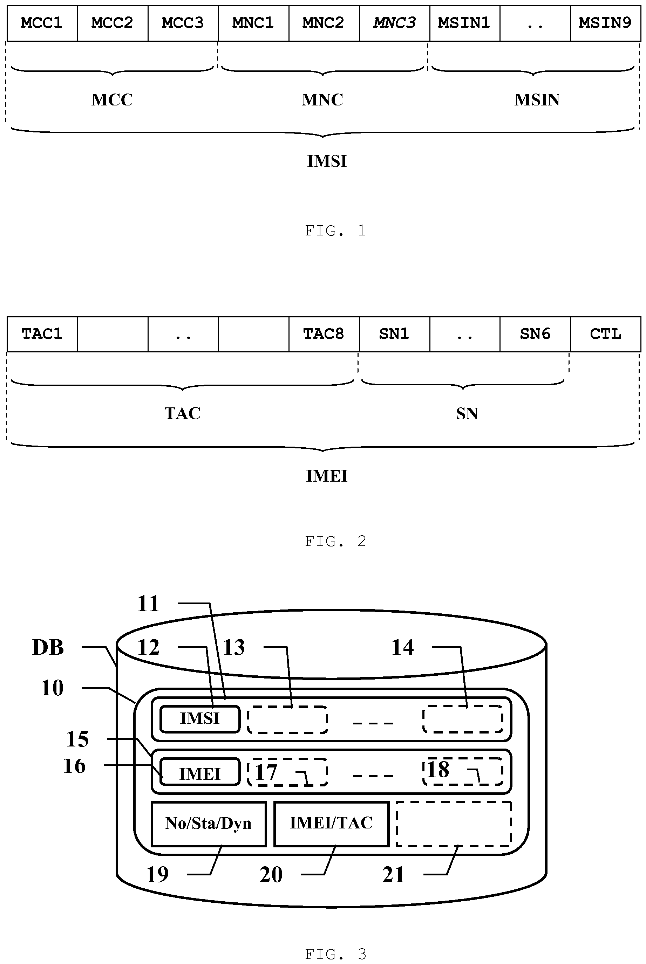

Un abonnement ou carte USIM est identifié de manière unique par un identifiant d'abonnement ou identité internationale d'abonné mobile, en anglais « international mobile subscriber identity » ou IMSI. Tel qu'illustré à la figure 1, un tel identifiant d'abonnement IMSI comprend typiquement 14 ou 15 digits également désignés caractères numériques. Ces digits se répartissent comme illustrés en trois premiers digits de code pays mobile, en anglais « mobile country code » ou MCC, suivis de deux (en Europe) ou trois (en Amérique du nord) digits de code réseau mobile, en anglais « mobile network code » ou MNC, eux-mêmes suivis de huit digits de numéro d'identification d'abonné mobile, en anglais « mobile subscriber identification number » ou MSIN, identifiant de manière unique un abonnement.

Un terminal est identifié de manière unique par un identifiant de terminal ou identité internationale d'équipement mobile, en anglais « international mobile equipment identity » ou IMEI. Tel qu'illustré à la figure 2, un tel identifiant de terminal IMEI comprend typiquement 15 ou 17 digits. Ces digits se répartissent comme illustrés en huit premiers digits de code d'allocation de type, en anglais « type allocation code » ou TAC définissant un type de terminal, suivis de six autres digits de numéro de série, en anglais « serial number » ou SN, eux-mêmes suivis d'un dernier digit de contrôle CTL, utilisé comme somme de contrôle des autres digits.

La présente invention n'est pas limitative d'un type de terminal. Un terminal peut être tout équipement apte à se connecter à un réseau de communication sans fil pour envoyer et de préférence recevoir des messages. Ainsi, dans le cadre de la présente invention, un terminal peut être un capteur muni d'un émetteur. Un tel capteur peut par exemple capter une température, un courant, une pression, un signal lumineux, une valeur numérique ou analogique etc. Dans le cadre de la présente invention, un terminal peut également présenter une interface utilisateur tel qu'un téléphone portable, un assistant personnel numérique (PDA), une tablette graphique numérique ou un ordinateur personnel portable.

L'identifiant de terminal IMEI est unique pour un terminal donné, en ce que le numéro de série SN est unique dans un type TAC donné. Il est à noter que le TAC, qui définit un type de terminal, est un préfixe de l'identifiant de terminal IMEI. En ne vérifiant/comparant un IMEI que pour la partie initiale préfixe du TAC, il est possible d'inclure tous les identifiant de terminal IMEI et donc tous les terminaux de ce même type TAC. Ceci permet de définir une règle d'association pour un unique terminal en comparant l'identifiant de terminal entier IMEI, ou pour un type de terminal en comparant uniquement la partie préfixe de l'identifiant de terminal, soit la partie TAC de son IMEI. Le préfixe/TAC est ainsi utilisé comme un masque lors d'une étape de vérification de présence d'un identifiant de terminal donné dans une pluralité d'identifiants de terminal.

Le procédé selon l'invention est destiné à être utilisé dans un environnement de réseau de communication cellulaire. Il vise à déterminer si un terminal MT et un abonnement sont autorisés ensemble à accéder et à utiliser ledit réseau de communication cellulaire.

A cette fin le procédé comprend les étapes suivantes. Au cours d'une première phase préparatoire est réalisée une étape de création d'une base de données DB et le cas échéant des enregistrements 10 qu'elle contient. Au cours d'une deuxième phase d'utilisation sont réalisées une étape de vérification et une étape d'autorisation.

La gestion de la base de données DB peut être réalisée par tout module du réseau de communication cellulaire. Elle peut aussi être distribuée sur plusieurs modules répartis dans le réseau de communication cellulaire.

La création d'un enregistrement 10 dans la base de données DB est typiquement préalable à la phase d'utilisation. Ainsi selon un mode de réalisation, il est créé avec un outil de gestion de base de données des enregistrements 10 définissants les terminaux, groupes de terminaux ou types de terminaux qui sont autorisés à utiliser le réseau de communication cellulaire et avec quel abonnement, ou quels groupes d'abonnements. Cependant, selon un mode de réalisation décrit plus loin, la création d'un enregistrement 10 peut aussi être concomitante de l'utilisation.

Un enregistrement 10, dont un mode de réalisation est illustré à la figure 3, associe une pluralité 11 d'identifiants d'abonnement comprenant au moins un identifiant d'abonnement 12 avec une pluralité 15 d'identifiants de terminal IMEI comprenant au moins un identifiant 16 de terminal.

Lors de l'étape de vérification, le procédé vérifie lorsqu'un terminal MT tente d'accéder aux services du réseau de communication cellulaire avec un abonnement, que le couple terminal MT/abonnement est autorisé pour un tel accès. Pour ce faire, le procédé parcourt la base de donnée DB afin de vérifier la présence d'au moins un enregistrement 10 comprenant ensemble l'identifiant d'abonnement IMSI dudit abonnement et l'identifiant de terminal IMEI dudit terminal MT.

Une telle vérification est avantageusement réalisée lors de chaque tentative de connexion d'un terminal MT ou d'un abonnement au réseau de communication cellulaire.

Ensuite a lieu l'étape d'autorisation. Au cours de cette étape, en fonction du résultat de l'étape de vérification, le procédé autorise ou non l'accès et permet la connexion au réseau de communication cellulaire. Si un enregistrement 10 a été trouvé qui comprend ensemble l'identifiant d'abonnement IMSI de l'abonnement et l'identifiant de terminal IMEI du terminal MT, candidats à l'utilisation du réseau de communication cellulaire, le procédé autorise la connexion. Le procédé la refuse dans le cas contraire.

La création d'un enregistrement 10 dans la base de données DB peut être réalisée bien avant l'utilisation de la base de données DB lors d'une phase préparatoire. Selon un mode de réalisation avantageux, il est possible de créer automatiquement un enregistrement 10 dans la base de données DB lors de la première tentative de connexion d'un terminal MT et d'un abonnement. Ainsi si un terminal MT ou un abonnement n'est pas connu de la base de données DB, en ce qu'aucun enregistrement 10 n'est encore présent dans la base de données DB comprenant l'identifiant de terminal IMEI dudit terminal ou l'identifiant d'abonnement IMSI dudit abonnement, un tel enregistrement 10 peut être crée lors de la première tentative de connexion dudit terminal MT et dudit abonnement. Ledit enregistrement 10 est alors créé qui comprend une pluralité d'identifiants abonnement comprenant au moins l'identifiant d'abonnement IMSI dudit abonnement associé avec une pluralité d'identifiants terminal comprenant au moins l'identifiant de terminal IMEI dudit terminal MT. Cette création automatique peut être modifiée ou adaptée en fonction de certains paramètres de configuration du procédé, qui sont détaillés plus loin.

La fonction d'un enregistrement 10 de la base de données DB est d'associer au moins un identifiant d'abonnement IMSI et au moins un identifiant de terminal IMEI. Cependant, afin de faciliter la définition des couples abonnement/terminal autorisées et la remplissage de la base de données DB, sans nécessiter de créer un enregistrement 10 par paire abonnement/terminal, il est prévu des possibilités de regroupement de ces couples abonnement/terminal au sein d'un même enregistrement 10. Un regroupement peut être réalisé sur les identifiants d'abonnement, sur les identifiants de terminal ou les deux à la fois.

Dans un enregistrement 10, une pluralité 11 d'identifiants d'abonnement ne comprend a minima qu'un unique identifiant d'abonnement 12. Elle peut encore comprendre une liste ou un ensemble d'identifiants d'abonnement 12-14. Dans ce cas lors d'une étape de vérification, un identifiant d'abonnement IMSI candidat est comparé avec tous les identifiants d'abonnement 12-14 compris dans l'enregistrement 10.

Un autre moyen avantageux d'inclure un plus grand nombre d'identifiants d'abonnement dans un enregistrement 10 est d'utiliser un intervalle. Un intervalle est défini par un identifiant d'abonnement minimum et un identifiant d'abonnement maximum. Ceci revient à inclure dans l'enregistrement 10 concerné tous les identifiants d'abonnement compris entre ledit identifiant d'abonnement minimum et ledit identifiant d'abonnement maximum. Dans ce cas, lors d'une étape de vérification, un identifiant d'abonnement IMSI candidat est comparé avec l'identifiant d'abonnement minimum et avec l'identifiant d'abonnement maximum, afin de vérifier s'il appartient ou non à l'intervalle. Ceci revient à le comparer avec tous les identifiants d'abonnement compris dans l'intervalle, et donc dans l'enregistrement 10.

Un tel intervalle d'identifiant d'abonnement est avantageux en ce qu'il comprend typiquement une série continue d'identifiants d'abonnement telle que délivrée par un fournisseur lors d'un achat en gros. Ceci est typiquement le cas des environnements inter machine où de nombreux abonnements sont nécessaires.

Les deux moyens précédents peuvent encore être combinés. Il est ainsi possible d'inclure dans un enregistrement 10, une liste ou un ensemble comprenant un ou plusieurs identifiants d'abonnement et/ou un ou plusieurs intervalles d'identifiant d'abonnement.

Dans ce cas encore, lors d'une étape de vérification, un identifiant d'abonnement IMSI candidat est comparé avec tous les identifiants d'abonnement ainsi compris ou définis par l'enregistrement 10.

De même, dans un enregistrement 10, une pluralité 15 d'identifiants de terminal comprend a minima un unique identifiant de terminal. Elle peut encore comprendre une liste ou un ensemble d'identifiants de terminal 16-18. Dans ce cas lors d'une étape de vérification, un identifiant de terminal IMEI candidat est comparé avec tous les identifiants de terminal 16-18 compris dans l'enregistrement 10.

Un autre moyen avantageux d'inclure un plus grand nombre d'identifiant de terminal dans un enregistrement 10 est, à l'instar des identifiants d'abonnement, d'utiliser un intervalle.

Un autre moyen avantageux d'inclure un plus grand nombre d'identifiant de terminal dans un enregistrement 10 est de considérer un préfixe d'identifiant de terminal. L'indication d'un préfixe revient à indiquer les n premiers digits d'un identifiant de terminal. Un tel préfixe définit alors, tel un masque, tous les identifiants de terminal qui ont le même préfixe, c'est-à-dire qui présentent les mêmes n premiers digits que ledit préfixe. Ceci revient à inclure dans l'enregistrement 10 concerné tous les identifiants de terminal qui présentent les mêmes n premiers digits que ledit préfixe.

Dans ce cas, lors d'une étape de vérification, seul le préfixe d'un identifiant de terminal IMEI candidat est comparé avec le préfixe de définition contenu dans l'enregistrement 10, afin de vérifier que les préfixes correspondent et que l'identifiant de terminal IMEI candidat est compris dans l'enregistrement 10.

Un tel préfixe est avantageux en ce qu'il permet de définir un grand nombre d'identifiants de terminal. Selon un mode de réalisation particulier, où le préfixe comprend les n=8 premiers digits, ledit préfixe se confond avec le TAC qui définit un type de terminal. Ainsi il est avantageusement possible de définir un enregistrement 10 qui définit une association possible entre un abonnement ou une pluralité d'abonnements et au moins un type de terminal.

Ainsi, il est possible d'associer un abonnement, ou ensemble, ou intervalle d'abonnements, à un ou plusieurs terminaux, ou types de terminal.

Les trois moyens précédents peuvent encore être combinés. Il est ainsi possible d'inclure dans un enregistrement 10, une liste ou un ensemble comprenant un ou plusieurs identifiants de terminal et/ou un ou plusieurs intervalles d'identifiant de terminal et/ou un ou plusieurs préfixes d'identifiant de terminal.

Dans ce cas encore, lors d'une étape de vérification, un identifiant de terminal IMEI candidat est comparé avec tous les identifiants de terminal ainsi compris ou définis par l'enregistrement 10.

En combinant, il est possible dans un même enregistrement 10 d'associer une pluralité d'identifiants d'abonnement comprenant zéro ou plusieurs identifiants d'abonnement et zéro ou plusieurs intervalles d'identifiants d'abonnement avec une pluralité d'identifiants de terminal comprenant zéro ou plusieurs identifiants de terminal, zéro ou plusieurs intervalles d'identifiant de terminal, et zéro ou plusieurs préfixes d'identifiant de terminal, voire même zéro ou plusieurs intervalles de préfixes d'identifiant de terminal.

Afin de préciser le mode de déroulement des étapes, tant de création, que de vérification ou d'autorisation, il est possible d'adjoindre au procédé des paramètres de configuration. De tels paramètres peuvent être associés à chaque enregistrement 10 de la base de données DB, ou encore au procédé lui-même, par exemple sous la forme d'un paramètre par défaut pour tout nouvel enregistrement 10.

Un tel paramètre peut être un « mode de vérification » 19. Ce « mode de vérification » 19 précise les modalités de l'étape de vérification et peut prendre comme valeurs « pas de vérification », en anglais « none », « vérification statique », en anglais « static check » et « vérification dynamique », en anglais « dynamic check ».

Associé à un enregistrement 10, un tel « mode de vérification » 19 détermine comment est réalisée l'étape de vérification. Pour un enregistrement 10 pour lequel le « mode de vérification » 19 a la valeur « pas de vérification », l'identifiant d'abonnement IMSI de l'abonnement n'est pas vérifié. Ainsi si un identifiant d'abonnement candidat IMSI est trouvé présent dans un enregistrement 10 affecté d'un « mode de vérification » positionné à « pas de vérification », ledit abonnement candidat est autorisé à accéder au réseau de communication cellulaire sans autre forme de vérification.

Dans une application dédiée à un environnement inter machine, l'objectif est principalement de vérifier que des abonnements à tarif spécifiques, dédiés à des terminaux machines ne sont pas utilisés dans des téléphones. Au contraire, un abonnement classique de téléphonie peut être utilisé dans un terminal machine. Il peut ainsi être associé, dans un enregistrement 10 de la base de données DB à un « mode de vérification » positionné à « pas de vérification ». La tarification peu avantageuse pour une telle application inter machine d'un tel abonnement de téléphonie peut cependant dissuader d'une telle utilisation.

Pour un enregistrement 10, la valeur « vérification statique » est la valeur la plus courante. Dans ce cas, l'identifiant d'abonnement IMSI de l'abonnement candidat est vérifié avec l'identifiant de terminal IMEI du terminal candidat en relation avec les enregistrements 10 de la base de données DB. Il est ainsi vérifié qu'il existe au moins un enregistrement 10 dans la base de données DB comprenant à la fois l'identifiant d'abonnement IMSI de l'abonnement candidat et l'identifiant de terminal IMEI du terminal candidat, afin d'autoriser l'accès ou non dudit couple terminal/abonnement.

Pour un enregistrement 10, la valeur « vérification dynamique » est utilisée pour un enregistrement 10 de la base de données (DB) destiné à être créé/mis à jour lors de la première tentative de connexion au réseau de communication cellulaire. Cette valeur « vérification dynamique » est temporaire en ce qu'elle est modifiée dès que l'enregistrement 10 est créé/mis à jour, pour prendre une nouvelle valeur parmi « pas de vérification » ou « vérification statique ».

Associé au procédé, en tant que valeur par défaut, un tel « mode de vérification », détermine la valeur prise par le « mode de vérification » d'un enregistrement 10 nouvellement créé.

Ainsi il peut être décidé que, pour tout nouveau couple terminal/abonnement qui n'a jamais été « vu » par le procédé, et pour lequel il n'existe pas d'enregistrement 10 dans la base de données DB, il soit créé un nouvel enregistrement 10 qui par défaut prend une valeur de « mode de vérification » égale, par exemple, à « vérification dynamique ».

Un autre paramètre peut être un « mode de valeur » 20. Ce « mode de valeur » 20 précise les modalités de l'étape de vérification et peut prendre comme valeurs « IMEI » ou « TAC ».

Associé à un enregistrement 10, un tel « mode de valeur » 20 détermine comment est comparé l'identifiant de terminal IMEI candidat aux identifiants de terminal 16-18 de la pluralité 15 d'identifiants de terminal de l'enregistrement. Si la valeur est « IMEI » un identifiant de terminal IMEI candidat est vérifié exactement, c'est-à-dire que l'on vérifie que l'identifiant de terminal entier est présent dans la pluralité 15. Au contraire si la valeur est « TAC » un identifiant de terminal IMEI candidat est vérifié pour une partie limitée à son préfixe TAC, c'est-à-dire que l'on vérifie qu'au moins le préfixe de l'identifiant de terminal est présent dans la pluralité 15.

Associé au procédé, en tant que valeur par défaut, un tel « mode de valeur », détermine la manière de créer un nouvel enregistrement 10. Lors d'une création automatique d'une nouvel enregistrement 10, cet enregistrement 10 se voit affecté d'au moins un identifiant d'abonnement égal à l'identifiant d'abonnement IMSI candidat. Il se voit aussi affecté d'au moins un identifiant de terminal. Cet identifiant de terminal vient ainsi peupler la pluralité 15 d'identifiants de terminal. Il est ajouté l'identifiant de terminal entier IMEI si le « mode de valeur » par défaut est « IMEI ». Il est ajouté le préfixe de l'identifiant de terminal, soit l'identifiant de terminal réduit à son TAC si le « mode de valeur » par défaut est « TAC »

Concernant la mise en oeuvre, plus particulièrement les étapes de vérification et d'autorisation, le procédé selon l'invention procède avantageusement par interception des messages de contrôle, en anglais « signalling messages ». Ainsi le procédé est avantageusement mis en oeuvre au niveau d'un module, passage obligé de ces messages de contrôle, lors d'une tentative de connexion d'un terminal MT au réseau de communication cellulaire.

Plusieurs modules du réseau de communication cellulaire peuvent ainsi être candidats à réaliser une telle interception des messages de contrôle. La description qui suit est donnée en référence à un réseau de communication cellulaire de type GSM. Elle est cependant généralisable à tout type de réseau.

Un module, en charge entre autres de localiser un terminal MT, avantageux en ce qu'il est nécessairement contacté à chaque changement de localisation d'un terminal MT, y compris à chaque nouvelle connexion au réseau, est un module registre de localisation, en anglais « home location register » ou HLR.

Un autre candidat, en charge de bloquer un terminal MT volé, avantageux en ce qu'il est nécessairement contacté à chaque nouvelle connexion au réseau, est un module registre d'identité d'équipement, en anglais « equipment identity register » ou EIR.

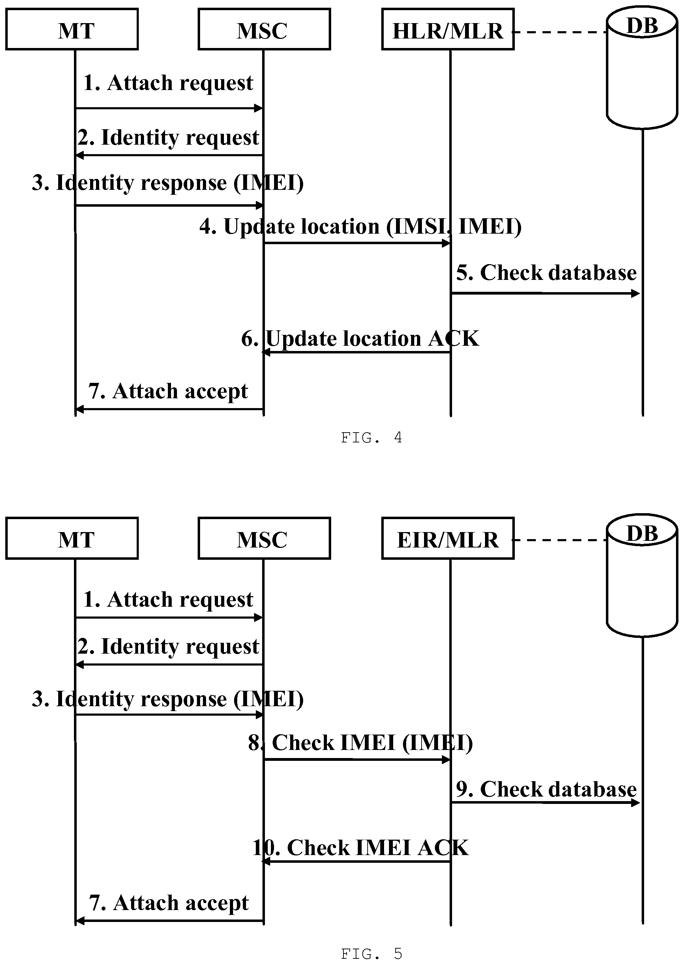

En référence aux figures 4 et 5 sont respectivement présentés un mode de réalisation basé sur un registre de localisation HLR et un mode de réalisation basé sur un registre d'identité d'équipement EIR au moyen de diagrammes de flot des messages échangés entre des modules d'un réseau de communication cellulaire. Les différents modules sont de gauche à droite un terminal MT, un module centre de commutation mobile, en anglais « mobile switching center » ou MSC et un module registre de localisation HLR pour la figure 4 et un module registre d'identité d'équipement EIR pour la figure 5. Tous les messages figurés sur les diagrammes des figures 4 et 5 sont des messages système de contrôle, en anglais « signalling messages ». Dans un réseau GSM, utilisant par exemple SS7, ils emploient typiquement le protocole partie application mobile, en anglais « mobile application part » ou MAP. Seuls les messages importants pour la compréhension ont été figurés sur ces deux figures 4, 5. D'autres messages, facultatifs, ou non indispensables à la compréhension ont été omis. De même, selon la configuration du réseau, il peut apparaître d'autres modules intermédiaires, tel VLR acronyme de l'anglais "visited location register" signifiant registre de localisation des visiteurs, qui relaient les messages. Ces messages et modules « secondaires » ont volontairement été omis afin de simplification. La présente invention s'étend naturellement aux procédés incluant ces messages et modules additionnels.

En référence au diagramme de la figure 4, lorsqu'un terminal MT tente de se connecter à un réseau de communication cellulaire, il dialogue sans fil avec une station de base, en anglais « base station » ou BS. Au sein de cette station de base BS le terminal MT entre plus particulièrement en contact avec un module centre de commutation mobile MSC. Le terminal MT envoie une demande de connexion 1, en anglais « attach request », au centre de commutation mobile MSC. Dans cette demande, l'identifiant d'abonnement IMSI de l'abonnement utilisé est typiquement comprise. Cet identifiant d'abonnement IMSI est classiquement utilisé comme identifiant au sein du réseau de communication cellulaire et est le plus souvent transmis avec un message de contrôle.

Par contre l'identifiant de terminal IMEI n'est pas nécessairement connu du réseau. Aussi selon l'invention, si l'identifiant de terminal IMEI n'est pas connu, le centre de commutation mobile MSC procède à une demande d'identité 2, en anglais « identity request », au moyen d'un message 2, adressé au terminal MT. Ce dernier répond au centre de commutation mobile MSC par un message 3 de réponse identité, en anglais « identity response », assorti dudit identifiant de terminal IMEI.

Pour tout nouveau terminal MT se connectant, le centre de commutation mobile MSC informe un module registre de localisation HLR en charge de recenser la position du terminal MT. Ceci s'effectue typiquement par un message de mise à jour de localisation 4, en anglais « location update » à destination dudit registre de localisation HLR. Ce message est classiquement assorti de l'identifiant d'abonnement IMSI. Selon l'invention, le procédé y adjoint l'identifiant de terminal IMEI. Alternativement, selon l'invention, l'identifiant de terminal IMEI peut être communiqué au registre de localisation HLR par tout autre moyen de communication.

Le registre de localisation HLR est ainsi en possession des deux identifiants, l'identifiant d'abonnement IMSI et l'identifiant de terminal IMEI. Le registre de localisation HLR est ainsi à même de mettre en oeuvre les différentes étapes du procédé. En relation avec une base de données DB dont il peut ou non être le gestionnaire et qui peut ou non être distante du HLR, le registre de localisation HLR peut créer un nouvel enregistrement 10, ou encore peut vérifier s'il existe au moins un enregistrement 10 dans la base de données DB, qui comprenne ensemble l'identifiant d'abonnement IMSI et l'identifiant de terminal IMEI. Ceci est réalisé au cours d'une étape 5 de vérification de la base de données, en anglais « check database ».

A l'issue d'une telle vérification, il peut être procédé à l'étape d'autorisation, en fonction du résultat de la vérification. Si la vérification est positive, le module registre de localisation HLR, renvoie selon l'invention, au module centre de commutation mobile MSC un message 6 d'acquittement de mise à jour de localisation. Si la vérification est négative, le module registre de localisation HLR ne renvoie pas le message 6 d'acquittement. Il peut faire envoyer ou non un message d'erreur au terminal MT ou encore informer de cette tentative de connexion erronée un autre module du réseau.

A réception, le cas échéant, du message 6 d'acquittement de mise à jour de localisation, le centre de commutation mobile MSC, sous réserve que toutes les éventuelles autres conditions préalables à une connexion soit validées, informe le terminal MT que la connexion est autorisée par un message 7 d'acceptation de connexion, en anglais « attach accept ».

En référence au diagramme de la figure 5, lorsqu'un terminal MT tente de se connecter à un réseau de communication cellulaire, les trois premières étapes sont les mêmes que pour l'exemple de la figure 4.

Pour tout nouveau terminal MT se connectant, le centre de commutation mobile MSC informe un module registre d'identité d'équipement EIR, en charge de lister les terminaux interdits par exemple parce qu'ils ont été déclarés volés. Ce module dispose ainsi d'une liste d'identifiant de terminal IMEI et chaque nouveau terminal qui se connecte au réseau doit être vérifié.

Pour cela le centre de commutation mobile MSC envoie au module registre d'identité d'équipement EIR un message 8 de vérification de l'identifiant de terminal IMEI, en anglais « check IMEI », assorti dudit identifiant de terminal IMEI afin de vérifier que ledit terminal n'est pas interdit.

Ce message peut être assorti de l'identifiant d'abonnement IMSI. A défaut, selon l'invention, le procédé y adjoint l'identifiant d'abonnement IMSI.

Selon un mode de réalisation, un identifiant manquant parmi l'identifiant d'abonnement IMSI ou l'identifiant de terminal IMEI peut être obtenu par une commande d'interrogation directe. Une telle commande selon un protocole de gestion de fichier distant, en anglais « remote file management » ou RFM, peut être, par exemple une commande fourniture d'information locale, en anglais « provide local information », adressée à un module du réseau de communication cellulaire apte à y répondre, tel un registre de localisation HLR, ou encore un module centre de traitement de message court, en anglais « short message service center » ou SMSC, ou encore directement la carte USIM.

Le registre d'identité d'équipement EIR est ainsi en possession des deux identifiants, l'identifiant d'abonnement IMSI et l'identifiant de terminal IMEI. Le registre d'identité d'équipement EIR est ainsi à même de mettre en oeuvre les différentes étapes du procédé. En relation avec une base de données DB dont il peut ou non être le gestionnaire, le registre d'identité d'équipement EIR peut créer un nouvel enregistrement 10, ou encore peut vérifier s'il existe au moins un enregistrement 10 dans la base de données DB, qui comprenne ensemble l'identifiant d'abonnement IMSI et l'identifiant de terminal IMEI. Ceci est réalisé au cours d'une étape 9 de vérification de la base de données, en anglais « check database ».

A l'issue d'une telle vérification, il peut être procédé à l'étape d'autorisation, en fonction du résultat de la vérification. Si la vérification est positive, le module registre d'identité d'équipement EIR, renvoie selon l'invention, au module centre de commutation mobile MSC un message 10 d'acquittement de vérification de l'identifiant de terminal. Si la vérification est négative, le module registre d'identité d'équipement EIR ne renvoie pas le message 10 d'acquittement. Il peut faire envoyer ou non un message d'erreur au terminal MT ou encore informer de cette tentative de connexion erronée un autre module du réseau.

A réception, le cas échéant, du message 10 d'acquittement de vérification de l'identifiant de terminal, le centre de commutation mobile MSC, sous réserve que toutes les éventuelles autres conditions préalables à une connexion soit validées, informe le terminal MT que la connexion est autorisée par un message 7 d'acceptation de connexion, en anglais « attach accept ».

Selon un mode de réalisation avantageux, le procédé selon l'invention est appliqué à un environnement inter machine. Dans un tel environnement, les terminaux sont des machines, ou terminaux machines, et le réseau de communication cellulaire est utilisé pour transmettre des données entre ces machines.

Dans un tel environnement il est intéressant de gérer lesdits terminaux machines au moyen d'un module MLR particulier. Une description précise d'un tel module MLR est, par exemple, donnée dans la demande de brevet européen N° 11306123.8 déposée le 9 Septembre 2011 par le même demandeur.

Un tel module MLR se substitue, pour les terminaux machines et leur gestion à certains modules du réseau de communication cellulaire. Parmi ces modules, se trouvent le module registre de localisation HLR et le module registre d'identité d'équipement EIR. Aussi dans un tel environnement comprenant un module MLR, ce module MLR implémente avantageusement le procédé selon l'invention. Pour cela ledit module MLR intercepte les messages de contrôle, afin de mettre en oeuvre les étapes de vérification et d'autorisation. Ces messages de contrôle transitent nécessairement par le module MLR, puisque ce dernier se substitue, au moins pour les terminaux machines, au module registre de localisation HLR et/ou au module registre d'identité d'équipement EIR. Les diagrammes de flots des échanges sont encore représentés par les figures 4 et 5.

L'invention n'est pas limitée aux modes de réalisation précédemment décrits mais s'étend à tout mode de réalisation conforme aux revendications.

## Revendications

1. Procédé de contrôle d'accès à un réseau de communication cellulaire, pour un terminal (MT) identifié par un identifiant de terminal (IMEI) avec un abonnement identifié par un identifiant d'abonnement (IMSI), comprenant les étapes suivantes effectuées à l'aide d'au moins un processeur:
- création, dans une base de donnée (DB) enregistrée dans des moyens de stockage de données, d'au moins un enregistrement (10) associant une pluralité (11) d'identifiants d'abonnement comprenant au moins un identifiant d'abonnement (12) avec une pluralité (15) d'identifiants de terminal comprenant au moins un identifiant de terminal (16), la pluralité (15) d'identifiants de terminal de l'enregistrement (10) étant formée par un ou plusieurs identifiants de terminal et/ou par un ou plusieurs intervalles d'identifiants de terminal et/ou par un ou plusieurs préfixes (TAC) d'identifiants de terminal, chaque préfix étant réputé comprendre tous les identifiants de terminal débutant par ledit préfixe (TAC),
- vérification que ledit terminal (MT) ensemble avec ledit abonnement sont bien autorisés à utiliser le réseau de communication cellulaire, par vérification de la présence dans la base de donnée (DB) d'au moins un enregistrement (10) comprenant l'identifiant d'abonnement (IMSI) dudit abonnement associé avec l'identifiant de terminal (IMEI) dudit terminal (MT),
**caractérisé en ce que** l'enregistrement (10) comprend également un « mode de valeur » (20) qui détermine comment doit être vérifié la présence de l'identifiant de terminal (IMEI) dudit terminal (MT) parmi les identifiants de terminal de la pluralité (15) d'identifiants de terminal (16) de l'enregistrement (10), le « mode de valeur » indiquant soit que l'identifiant de terminal (IMEI) dudit terminal (MT) doit être vérifié exactement, soit que l'identifiant de terminal (IMEI) dudit terminal (MT) doit être vérifié pour une partie limitée à son préfixe (TAC),
ladite vérification étant réalisée lors de chaque tentative de connexion dudit terminal (MT) ou dudit abonnement au réseau de communication cellulaire,
- autorisation d'accès ou refus de l'accès dudit terminal (MT) audit réseau en fonction du résultat de l'étape de vérification.

2. Procédé selon la revendication 1, où l'étape de création d'un enregistrement (10) dans la base de données (DB) est automatiquement réalisée lors d'une première tentative de connexion d'un terminal (MT) et d'un abonnement, l'enregistrement (10) ainsi créé comprenant une pluralité (11) d'identifiants d'abonnement comprenant au moins l'identifiant d'abonnement (IMSI) dudit abonnement associé avec une pluralité (15) d'identifiants de terminal comprenant au moins l'identifiant de terminal (IMEI) dudit terminal (MT).

3. Procédé selon la revendication 1 ou 2, où une pluralité (11) d'identifiants d'abonnement est définie par au moins un intervalle défini par un identifiant d'abonnement minimum et un identifiant d'abonnement maximum, et est réputée comprendre tous les identifiants d'abonnement compris entre ledit identifiant d'abonnement minimum et ledit identifiant d'abonnement maximum.

4. Procédé selon l'une quelconque des revendications 1 à 3, où un enregistrement (10) dans la base de données (DB) comprend encore un « mode de vérification » (19) prenant ses valeurs parmi : « pas de vérification » pour lequel l'identifiant d'abonnement (IMSI) de l'abonnement n'est pas vérifié, « vérification statique » pour lequel l'identifiant d'abonnement (IMSI) de l'abonnement est vérifié en relation avec l'identifiant de terminal (IMEI) et les enregistrements (10) de la base de données (DB), et « vérification dynamique » pour lequel un enregistrement de la base de données (DB) est crée/mis à jour, le « mode de vérification » (19) dudit enregistrement (10) étant, après création, modifié de « vérification dynamique » à une autre valeur.

5. Procédé selon l'une quelconque des revendications 1 à 4, où l'enregistrement (10) dans la base de données (DB) relatif au « mode de valeur » (20) prend ses valeurs parmi : « IMEI » pour lequel un identifiant de terminal (IMEI) est vérifié exactement, et « TAC » pour lequel un identifiant de terminal (IMEI) est vérifié pour une partie limitée à son préfixe (TAC).

6. Procédé selon l'une quelconque des revendications 1 à 5, où le « mode de valeur », détermine la manière de créer un nouvel enregistrement (10) lors d'une création automatique d'un nouvel enregistrement (10) réalisée lors d'une première tentative de connexion d'un terminal (MT), l'enregistrement (10) se voyant affecté d'au moins un identifiant d'abonnement égal à l'identifiant d'abonnement (IMSI) dudit abonnement associé et se voyant aussi affecté d'au moins un identifiant de terminal venant peupler ladite pluralité (15) d'identifiants de terminal et correspondant, en fonction de la valeur du « mode de valeur » :soit à l'identifiant de terminal entier (IMEI) dudit terminal (MT), soit à un préfixe (TAC) de l'identifiant de terminal dudit terminal (MT).

7. Procédé selon l'une quelconque des revendications 1 à 6, où les étapes de vérification et d'autorisation sont mises en oeuvre par interception des messages de contrôle, transitant nécessairement par un module, lors d'une tentative de connexion d'un terminal (MT) au réseau de communication cellulaire.

8. Procédé selon la revendication 7, où ledit module est un module registre de localisation (HLR).

9. Procédé selon la revendication 7 ou 8, où ledit module est un module registre d'identité d'équipement (EIR).

10. Procédé selon l'une quelconque des revendications précédentes, dans lequel le terminal (MT) est un capteur dédié à une machine pour remonter des informations captées par le capteur vers un serveur connecté audit réseau.

11. Procédé selon l'une quelconque des revendications 1 à 9, appliqué à un environnement inter machines dédié à des terminaux machines, où les étapes de vérification et d'autorisation sont mises en oeuvre par interception des messages de contrôle, transitant nécessairement par un module (MLR) se substituant, pour lesdits terminaux machines, à un module registre de localisation (HLR) et/ou à un module registre d'identité d'équipement (EIR).

12. Produit programme d'ordinateur comprenant des instructions, qui lorsqu'elles sont effectuées par au moins un processeur, exécute au moins les étapes suivantes du procédé selon l'une quelconque des revendications précédentes:
- ladite étape de vérification, ladite vérification étant effectuée en fonction du « mode de valeur » (20) ;
- ladite étape d'autorisation d'accès ou de refus de l'accès dudit terminal (MT) audit réseau en fonction du résultat de l'étape de vérification.

13. Système de contrôle d'accès à un réseau de communication cellulaire, pour un terminal (MT) identifié par un identifiant de terminal (IMEI) avec un abonnement identifié par un identifiant d'abonnement (IMSI), **caractérisé en ce qu'**il comprend:
- des moyens de stockage de données comprenant au moins une base de donnée (DB), la base de donnée (DB) comportant au moins un enregistrement (10) associant une pluralité (11) d'identifiants d'abonnement comprenant au moins un identifiant d'abonnement (12) avec une pluralité (15) d'identifiants de terminal comprenant au moins un identifiant de terminal (16), la pluralité (15) d'identifiants de terminal de l'enregistrement (10) étant formée par un ou plusieurs identifiants de terminal et/ou par un ou plusieurs intervalles d'identifiants de terminal et/ou par un ou plusieurs préfixes (TAC) d'identifiants de terminal, chaque préfix étant réputé comprendre tous les identifiants de terminal débutant par ledit préfixe (TAC),
- des moyens de vérification configurés pour vérifier, lors de chaque tentative de connexion dudit terminal (MT) ou dudit abonnement au réseau de communication cellulaire, que ledit terminal (MT) ensemble avec ledit abonnement sont bien autorisés à utiliser le réseau de communication cellulaire, par vérification de la présence dans la base de donnée (DB) d'au moins un enregistrement comprenant l'identifiant d'abonnement (IMSI) dudit abonnement associé avec l'identifiant de terminal (IMEI) dudit terminal (MT), l'enregistrement (10) comprenant également un « mode de valeur » (20) qui détermine comment doit être vérifié la présence de l'identifiant de terminal (IMEI) dudit terminal (MT) parmi les identifiants de terminal de la pluralité (15) d'identifiants de terminal (16) de l'enregistrement (10), le « mode de valeur » indiquant soit que l'identifiant de terminal (IMEI) dudit terminal (MT) doit être vérifié exactement, soit que l'identifiant de terminal (IMEI) dudit terminal (MT) doit est vérifié pour une partie limitée à son préfixe (TAC),
- des moyens agencés pour autoriser l'accès ou refuser l'accès dudit terminal (MT) audit réseau en fonction du résultat de la vérification.

14. Système selon la revendication précédente dans lequel moyens de stockage de données, les moyens de vérification et les moyens agencés pour autoriser l'accès ou refuser l'accès sont compris dans un unique module.

## Patentansprüche

1. Verfahren zur Kontrolle des Zugangs zu einem zellularen Kommunikationsnetz für ein Terminal (MT), das durch einen Terminalidentifikator (IMEI) identifiziert ist, mit einem Teilnehmer, der durch einen Teilnehmeridentifikator (IMSI) identifiziert ist, umfassend die folgenden Schritte, die mit Hilfe mindestens eines Prozessors ausgeführt werden:
- in einer Datenbasis (DB), die in Datenspeichermitteln registriert ist, Erzeugung mindestens einer Registrierung (10), die eine Vielzahl (11) von Teilnehmeridentifikatoren, umfassend mindestens einen Teilnehmeridentifikator (12), einer Vielzahl (15) von Terminalidentifikatoren, umfassend mindestens einen Teilnehmeridentifikator (16), zuordnet, wobei die Vielzahl (15) von Terminalidentifikatoren der Registrierung (10) von einem oder mehreren Terminalidentifikatoren und/oder von einem oder mehreren Intervallen von Terminalidentifikatoren und/oder von einem oder mehreren Präfixen (TAC) von Terminalidentifikatoren gebildet ist, wobei jedes Präfix alle Terminalidentifikatoren umfassen soll, die mit dem Präfix (TAC) beginnen,
- Überprüfung, ob das Terminal (MT) gemeinsam mit dem Teilnehmer auch autorisiert sind, das zellulare Kommunikationsnetz zu verwenden, durch Überprüfung des Vorhandenseins mindestens einer Registrierung (10), umfassend den Teilnehmeridentifikator (IMSI) des zugehörigen Teilnehmers mit dem Terminalidentifikator (IMEI) des Terminals (MT), in der Datenbasis (DB),
**dadurch gekennzeichnet, dass** die Registrierung (10) auch einen "Wertmodus" (20) umfasst, der bestimmt, wie das Vorhandensein des Terminalidentifikators (IMEI) des Terminals (MT) unter den Terminalidentifikatoren der Vielzahl (15) von Terminalidentifikatoren (16) der Registrierung (10) zu überprüfen ist, wobei der "Wertmodus" entweder angibt, dass der Terminalidentifikator (IMEI) des Terminals exakt zu überprüfen ist, oder dass der Terminalidentifikator (IMEI) des Terminals (MT) für einen auf sein Präfix (TAC) begrenzten Teil zu überprüfen ist,
wobei die Überprüfung bei jedem Anschlussversuch des Terminals (MT) oder des Teilnehmers an das zellulare Kommunikationsnetz durchgeführt wird,
- Autorisierung des Zugangs oder Verweigerung des Zugangs des Terminals (MT) zum Netz in Abhängigkeit vom Resultat des Überprüfungsschrittes.

2. Verfahren nach Anspruch 1, bei dem der Schritt der Erzeugung einer Registrierung (10) in der Datenbasis (DB) automatisch bei einem ersten Anschlussversuch eines Terminals (MT) und eines Teilnehmers erfolgt, wobei die so erzeugte Registrierung (10) eine Vielzahl (11) von Teilnehmeridentifikatoren umfasst, die mindestens den Teilnehmeridentifikator (IMSI) des zugehörigen Teilnehmers mit einer Vielzahl (15) von Terminalidentifikatoren, umfassend mindestens den Teilnehmeridentifikator (IMEI) des Terminals (MT), umfassen.

3. Verfahren nach Anspruch 1 oder 2, bei dem eine Vielzahl (11) von Teilnehmeridentifikatoren durch mindestens ein Intervall definiert ist, das durch einen minimalen Teilnehmeridentifikator und einen maximalen Teilnehmeridentifikator definiert ist, und alle Teilnehmeridentifikatoren umfassen soll, die zwischen dem minimalen Teilnehmeridentifikator und dem maximalen Teilnehmeridentifikator enthalten sind.

4. Verfahren nach einem der Ansprüche 1 bis 3, bei dem eine Registrierung (10) in der Datenbasis (DB) auch einen "Überprüfungsmodus" (19) umfasst, der seine Werte auswählt unter: "keine Überprüfung", bei der der Teilnehmeridentifikator (IMSI) des Teilnehmers nicht überprüft wird, "statische Überprüfung", bei der der Teilnehmeridentifikator (IMSI) des Teilnehmers in Verbindung mit dem Terminalidentifikator (IMEI) und den Registrierungen (10) der Datenbasis (DB) überprüft wird, und "dynamische Überprüfung", bei der eine Registrierung der Datenbasis (DB) erzeugt/aktualisiert wird, wobei der "Überprüfungsmodus" (19) der Registrierung (10) nach seiner Erzeugung von "dynamischer Überprüfung" auf einen anderen Wert geändert wird.

5. Verfahren nach einem der Ansprüche 1 bis 4, bei dem die Registrierung (10) in der Datenbasis (DB) in Zusammenhang mit dem "Wertmodus" (20) ihre Werte auswählt unter: "IMEI", bei dem ein Terminalidentifikator (IMEI) exakt überprüft wird, und "TAC", bei dem ein Terminalidentifikator (IMEI) für einen auf sein Präfix (TAC) begrenzten Teil überprüft wird.

6. Verfahren nach einem der Ansprüche 1 bis 5, bei dem der "Wertmodus" die Art und Weise bestimmt, wie eine neue Registrierung (10) bei einer automatischen Erzeugung einer neuen Registrierung (10), die bei einem ersten Anschlussversuch eines Terminals (MT) erfolgt, zu erzeugen ist, wobei die Registrierung (10) von mindestens einem Teilnehmeridentifikator gleich dem Teilnehmeridentifikator (IMSI) des zugehörigen Teilnehmers betroffen ist, und auch von mindestens einem Teilnehmeridentifikator betroffen ist, der die Vielzahl (15) von Terminalidentifikatoren besetzt und in Abhängigkeit vom Wert des "Wertmodus": entweder dem ganzen Terminalidentifikator (IMEI) des Terminals (MT) oder einem Präfix (TAC) des Terminalidentifikators des Terminals (MT) entspricht.

7. Verfahren nach einem der Ansprüche 1 bis 6, bei dem die Schritte der Überprüfung und Autorisierung durch Abfangen der Kontrollmeldungen, die notwendigerweise durch ein Modul laufen, bei einem Anschlussversuch eines Terminals (MT) an das zellulare Kommunikationsnetz eingesetzt werden.

8. Verfahren nach Anspruch 7, bei dem das Modul ein Lokalisierungs-Registermodul (HLR) ist.

9. Verfahren nach Anspruch 7 oder 8, bei dem das Modul ein Ausrüstungsidentitäts-Registermodul (EIR).

10. Verfahren nach einem der vorhergehenden Ansprüche, bei dem das Terminal (MT) ein Sensor ist, der für eine Maschine bestimmt ist, um vom Sensor erfasste Informationen zu einem an das Netz angeschlossenen Server zu übermitteln.

11. Verfahren nach einem der Ansprüche 1 bis 9, das an einer Umgebung zwischen Maschinen angewandt wird, die für Maschinenterminals bestimmt ist, bei dem die Schritte der Überprüfung und Autorisierung durch Abfangen der Kontrollmeldungen, die notwendigerweise durch ein Modul (MLR) verlaufen, das für die Maschinenterminals an die Stelle eines Lokalisierungs-Registermoduls (HLR) und/oder eines Ausrüstungsidentitäts-Registermoduls (EIR) tritt, eingesetzt werden.

12. Computerprogrammprodukt, umfassend Befehle, die, wenn sie von mindestens einem Prozessor ausgeführt werden, mindestens die folgenden Schritte des Verfahrens nach einem der vorhergehenden Ansprüche ausführen:
- den Schritt der Überprüfung, wobei die Überprüfung in Abhängigkeit vom "Wertmodus" (20) erfolgt;
- den Schritt einer Autorisierung eines Zugangs oder einer Verweigerung des Zugangs des Terminals (MT) zum Netz in Abhängigkeit vom Resultat des Überprüfungsschrittes.

13. System zur Kontrolle des Zugangs zu einem zellularen Kommunikationsnetz für ein Terminal (MT), das durch einen Terminalidentifikator (IMEI) identifiziert ist, mit einem Teilnehmer, der durch einen Teilnehmeridentifikator (IMSI) identifiziert ist, **dadurch gekennzeichnet, dass** es umfasst:
- Mittel zur Datenspeicherung, umfassend mindestens eine Datenbasis (DB), wobei die Datenbasis (DB) mindestens eine Registrierung (10) umfasst, die eine Vielzahl (11) von Teilnehmeridentifikatoren, umfassend mindestens einen Teilnehmeridentifikator (12), einer Vielzahl (15) von Terminalidentifikatoren, umfassend mindestens einen Teilnehmeridentifikator (16), zuordnet, wobei die Vielzahl (15) von Terminalidentifikatoren der Registrierung (10) von einem oder mehreren Terminalidentifikatoren und/oder von einem oder mehreren Intervallen von Terminalidentifikatoren und/oder von einem oder mehreren Präfixen (TAC) von Terminalidentifikatoren gebildet ist, wobei jedes Präfix alle Terminalidentifikatoren umfassen soll, die mit dem Präfix (TAC) beginnen,
- Überprüfungsmittel, die dazu vorgesehen sind, bei jedem Anschlussversuch des Terminals (MT) oder des Teilnehmers an das zellulare Kommunikationsnetz zu überprüfen, ob das Terminal (MT) gemeinsam mit dem Teilnehmer auch autorisiert sind, das zellulare Kommunikationsnetz zu verwenden, durch Überprüfung des Vorhandenseins mindestens einer Registrierung, umfassend den Teilnehmeridentifikator (IMSI) des zugehörigen Teilnehmers mit dem Terminalidentifikator (IMEI) des Terminals (MT), in der Datenbasis (DB),
wobei die Registrierung (10) auch einen "Wertmodus" (20) umfasst, der bestimmt, wie das Vorhandensein des Terminalidentifikators (IMEI) des Terminals (MT) unter den Terminalidentifikatoren der Vielzahl (15) von Terminalidentifikatoren (16) der Registrierung (10) zu überprüfen ist, wobei der "Wertmodus" entweder angibt, dass der Terminalidentifikator (IMEI) des Terminals exakt zu überprüfen ist, oder dass der Terminalidentifikator (IMEI) des Terminals (MT) für einen auf sein Präfix (TAC) begrenzten Teil zu überprüfen ist,
- Mittel zur Autorisierung des Zugangs oder Verweigerung des Zugangs des Terminals (MT) zum Netz in Abhängigkeit vom Resultat des Überprüfungsschrittes.

14. System nach dem vorhergehenden Anspruch, bei dem Datenspeichermittel, die Überprüfungsmittel und die Mittel zur Autorisierung des Zugangs oder Verweigerung des Zugangs in einem einzigen Modul enthalten sind.

## Claims

1. A method of controlling access to a cellular communication network, for a terminal (MT) identified by a terminal identifier (IMEI) with a subscription identified by a subscription identifier (IMSI), comprising the following steps performed by means of at least one processor:
- creation, in a database (DB) recorded in data storage means, of at least one record (10) associating a plurality of subscription identifiers (11) comprising at least one subscription identifier (12) with a plurality of terminal identifiers (15) comprising at least one terminal identifier (16), the plurality (15) of terminal identifiers of the record (10) being formed by one or more terminal identifiers and/or by one or more terminal identifier ranges and/or by one or more terminal identifier prefixes (TAC), each prefix being deemed to comprise all the terminal identifiers beginning with said prefix (TAC),
- checking that said terminal (MT) together with said subscription are indeed authorised to use the cellular communication network, by verifying the presence in the database (DB) of at least one record (10) comprising the subscription identifier (IMSI) of said subscription associated with the terminal identifier (IMIE) of said terminal (MT),
**characterised in that** the record (10) also comprises a "value mode" (20) that determines how the presence of the terminal identifier (IMEI) of said terminal (MT) is to be verified among the terminal identifiers of the plurality (15) of terminal identifiers (16) of the record (10), the "value mode" indicating either that the terminal identifier (IMEI) of said terminal (MT) must be verified exactly, or that the terminal identifier (IMEI) of said terminal (MT) must be verified for a limited part to its prefix (TAC),
said verification being performed at the time of each attempt at connection of said terminal (MT) or of said subscription to the cellular communication network,
- authorisation of access or refusal of access of said terminal (MT) to said network according to the result of the verification step.

2. A method according to claim 1, where the step of creating a record (10) in the database (DB) is automatically done at the time of a first attempt at connection of a terminal (MT) and of a subscription, the record (10) thus created comprising a plurality of subscription identifiers (11) comprising at least the subscription identifier (IMSI) of said subscription associated with a plurality (15) of terminal identifiers comprising at least the terminal identifier (IMEI) of said terminal (MT).

3. A method according claim 1 or 2, where a plurality (11) of subscription identifiers is defined by at least one range defined by a minimum subscription identifier and a maximum subscription identifier, and is deemed to comprise all the subscription identifiers included between said minimum subscription identifier and said maximum subscription identifier.

4. A method according to any one of claims 1 to 3, where a record (10) in the database (DB) also comprises a "verification mode" (19) taking its values from: "none" for which the subscription identifier (IMSI) of the subscription is not verified, "static verification" for which the subscription identifier (IMSI) of the subscription is verified in relation to the terminal identifier (IMEI) and the records in the database, and "dynamic verification" for which a record (10) in the database (DB) is created/updated, the "verification mode" of said record (10) being, after creation, changed from "dynamic verification" to another value.

5. A method according to any one of claims 1 to 4, where the record (10) in the database (DB) relating to the "value mode" (20) takes its values from: "IMEI" for which a terminal identifier (IMEI) is verified exactly, and "TAC" for which a terminal identifier (IMEI) is verified for a limited part to its prefix (TAC).

6. A method according to any one of claims 1 to 5, where the "value mode" determines the manner of creating a new record (10) at the time of an automatic creation of a new record (10) done at a first connection attempt of a terminal (MT), the record (10) being allocated at least one subscription identifier equal to the subscription identifier (IMSI) of said associated subscription and also being allocated at least one terminal identifier populating said plurality (15) of terminal identifiers and corresponding, according to the value of the "value mode": either to the entire terminal identifier (IMEI) of said terminal (MT) or to a prefix (TAC) of the terminal identifier of said terminal (MT).

7. A method according to any one of claims 1 to 6, where the verification and authorisation steps are implemented by interception of the check messages, necessarily passing through a module, when a terminal (MT) attempts to connect to the cellular communication network.

8. A method according to claim 7, where said module is a location register module (HLR).

9. A method according to claim 7 or 8, where said module is an equipment identity register module (EIR).

10. A method according to any one of the preceding claims, in which the terminal (MT) is a sensor dedicated to a machine for transferring information captured by the sensor to a server connected to said network.

11. A method according to any one of claims 1 to 9, applied to an intermachine environment dedicated to machine terminals, where the verification and authorisation steps are implemented by intercepting the check messages, necessarily passing through a module (MLR) substituted, with regard to said machine terminals, for a location register module (HLR) and/or an equipment identity register module (EIR).

12. Computer program product comprising instructions which, when they are implemented by at least one processor, executes at least the following steps of the method according to any one of the preceding claims:
- said step of verification, said verification being made according to the "value mode" (20);
- said step of authorisation of access or of refusal of access of said terminal (MT) to said network according to the result of the verification step.

13. A system for controlling access to a cellular communication network, for a terminal (MT) identified by a terminal identifier (IMEI) with a subscription identified by a subscription identifier (IMSI), wherein it comprises:
- data storage means comprising at least one database (DB), the database (DB) comprising at least one record (10) associating a plurality (11) of subscription identifiers comprising at least one subscription identifier (12) with a plurality (15) of terminal identifiers comprising at least one terminal identifier (16), the plurality (15) of terminal identifiers of the record (10) being formed by one or more terminal identifiers and/or by one or more ranges of terminal identifiers and/or by one or more terminal identifier prefixes (TAC), each prefix being deemed to comprise all the terminal identifiers beginning with said prefix (TAC),
- verification means configured so as to verify, at each attempt at connection of said terminal (MT) or said subscription to the cellular communication network, that said terminal (MT), together with said subscription, are indeed authorised to use the cellular communication network, by verifying the presence in the database (DB) of at least one record comprising the subscription identifier (IMSI) of said subscription associated with the terminal identifier (IMEI) of said terminal (MT),
the record (10) also comprising a "value mode" (20) that determines how the presence of the terminal identifier (IMEI) of said terminal (MT) is to be verified among the terminal identifiers in the plurality (15) of terminal identifiers (16) of the record (10), the "value mode" indicating either that the terminal identifier (IMEI) of said terminal (MT) must be verified exactly, or that the terminal identifier (IMEI) of said terminal (MT) must be verified for a limited part to its prefix (TAC),
- means arranged to authorise access or refuse access of said terminal (MT) to said network according to the result of the verification.

14. A system according to the preceding claim, in which data storage means, the verification means and the means arranged to authorise access or refuse access are included in a single module.
